# EUROPEAN PATENT SPECIFICATION

(11) **EP 3 070 569 B1**
(45) Date of publication and mention of the grant of the patent: **23.10.2019**
(21) Application number: 16161470.6
(22) Date of filing: 21.03.2016
(51) Int. Cl.: G05D 23/19, H03B 1/02, H05B 3/14

(54) **SMART MANAGEMENT METHOD FOR HEATING PLANT WORKING BY MEANS OF ELECTRICAL RADIATIVE ELEMENTS**
INTELLIGENTES VERWALTUNGSVERFAHREN FÜR HEIZWERK MIT ELEKTRISCHEN STRAHLUNGSELEMENTEN
PROCEDE DE GESTION INTELLIGENTE POUR CENTRALE DE CHAUFFAGE AVEC ELEMENTS RADIATIFS A ELECTRICITE

(30) Priority: 20.03.2015 IT UB20150444
(43) Date of publication of application: 21.09.2016
(73) Proprietor: Zeziola, Andrea, 25032 Chiari (Brescia) (IT)
(72) Inventor: Zeziola, Andrea, 25032 Chiari (Brescia) (IT)
(74) Representative: Lunati & Mazzoni S.r.L.

(56) References cited:
- DE-A1- 19 651 484
- US-A- 4 090 062

## Description

The present invention relates to a method of heating an environment composed of a plurality of zones as recited in the preamble of the first claim.

The prior art, concerning management of heating plants used in residential buildings (civil, commercial, industrial), generally involves the use of one or more room thermostats which measure solely the air temperature of the heated rooms. The presence of a single thermostat for the management of multiple rooms is still the most widespread system, but the need to make more efficient use of energy has introduced the practice of subdividing the heating plant into several heating zones.

A heating zone is defined as the area where a portion of the heating plant is present, consisting of one or more heating elements, managed by a device able to measure the temperature and start and stop the dispensing of heat energy.

The current state of the art is characterised by a long sinusoidal trend of the temperature over time, with significant changes and consequent low living comfort and low energy efficiency.

In practice, the devices used today for the heat management of heating plants start at maximum power of the heating elements until the environment reaches the set temperature, and then turn off the heating element until the cooling of the environment to the minimum threshold value for intervention of the room thermostat. The temperature of the room thus reaches higher values than those set, for the thermal inertia characteristic of the heating elements and reaches lower values than those set before the heating devices resume functioning. The environmental temperature change is significant and comprised, usually, between values of + 2°C and -2°C more than the set values, when the sensitivity of the devices is around + /- 1 ° C.

Some heating methods are disclosed in US4090062 and in DE19651484A1. The prior art described has a number of significant drawbacks which can be summarised as high energy-consumption as a result of inefficient adjustment, environmental discomfort (thermal) and consequent sensation of physical discomfort, high economic cost because of the need to avail of high electric power, impossibility of constructing civil plants due to insufficient available electrical power.

In particular the radiant heating systems of the electric type, generally positioned on the floor, require significantly high electrical power and the operating method, typical of the current state of the art, discourages their use. Having a high electrical power involves, in addition, increased costs of all the electricity consumed.

In this situation the technical purpose of the present invention is to devise a management procedure of heating plants able to substantially overcome the drawbacks mentioned above

Within the sphere of said technical purpose one important aim of the invention is to obtain a management system of heating plants which enables a constant thermal comfort for the occupants of said areas. Another important aim of the invention is to make a management system of heating plants which allows a significant reduction of the electric power required for the use of electrical heating devices and which also allows an optimisation of the energy supplied to said heating devices.

The technical purpose and specified aims are achieved by a method of heating an environment composed of a plurality of zones as claimed in the appended Claim 1. Preferred embodiments are described in the dependent claim.

The characteristics and advantages of the invention are clearly evident from the following detailed description of preferred embodiments thereof, with reference to the accompanying drawings, in which:

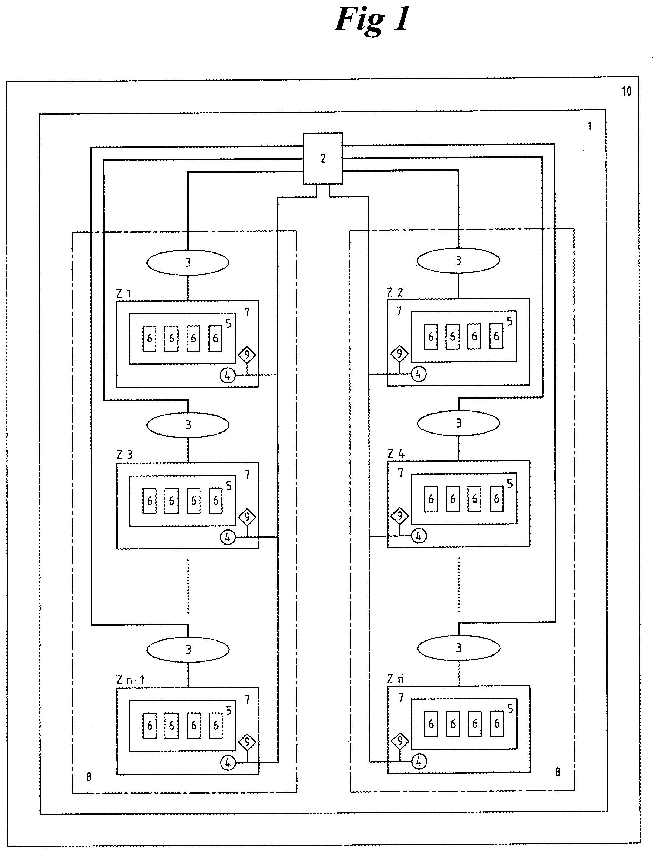

**Fig. 1** shows a general configuration diagram, which the smart management system of the heating plant according to the invention operates on;

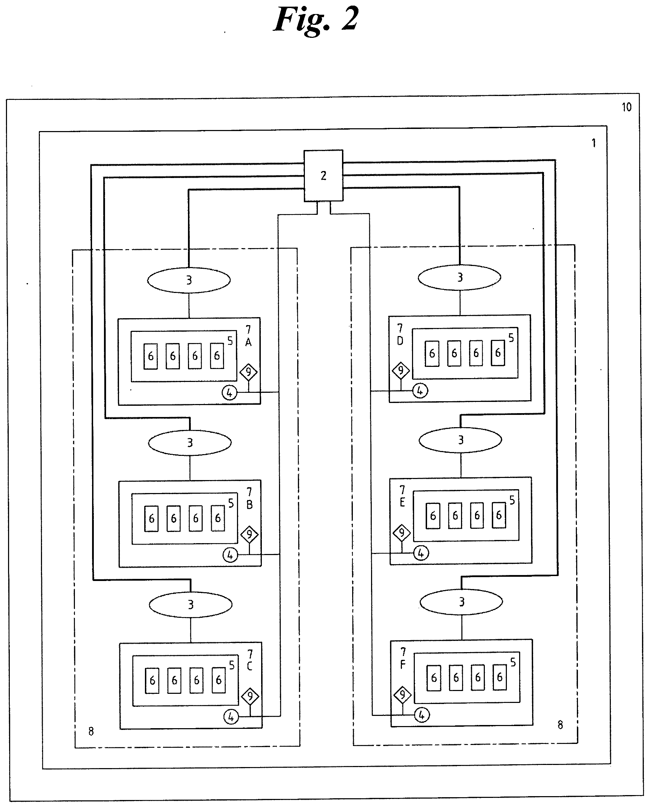

**Fig. 2** shows a particular configuration diagram, by way of example, which the smart management system of the heating plant according to the invention operates on;
**Fig. 3** shows in a table the functioning operation of the smart management system of the heating plant according to the invention, referring to the configuration shown in Fig. 2.
**Fig. 4** shows a graph relative to the invention.

### Analytical description

The smart management method according to the invention is dedicated to heating plants **10**.

It concerns the management of the heating plant **10** of a building or portion thereof, such as an apartment, an office, an industrial building, and so forth, divided into a plurality of zones **7**. It is preferably of the hydronic floor type.

The control device indicated by reference numeral **2** is the central core of the plant 10 and part thereof, the part allowing the control of any other device connected to it. It may consist of PLC or logic boards controlled by microprocessors, by PC or other electronic devices able to act according to a programmed logic and interface with actuators **3,** sensors **4** and detectors **9**.

The actuators indicated by reference numeral 3 comprise control means which permit the turning on and off of the radiant devices 5.

In particular, said means comprise solid state SSR relays controlled by the control device 2, since directly connected to it via cable or wirelessly, using radio waves or Radio Frequency (RF) in general. Said actuators are physically connected to the radiant devices 5.

The sensors indicated by reference numeral 4 comprise detection means of the temperature of the radiant devices 6, and preferably also of the environment heated thereby and/or adjacent environments (external). They are preferably temperature probes or electronic thermometers.

The radiant devices indicated by reference numeral **5** are responsible for providing heat and are composed of a plurality of radiant elements **6**, sized and arranged according to their characteristics and the zone **7** to be heated. In special cases they may consist of a single radiant element. The radiant elements 6 are heating elements suitable to provide heat to the environment mainly by irradiation and are powered by means of electric current.

These are radiant panels or manufactured items consisting of one or more electric heating elements and other materials suitable to make them into items of furniture or construction of any shape and/or size and/or material.

They are in particular panels or bands, thus elements extending mainly in a plane or surface, with a reduced thickness. They preferably have a thickness of less than 5 mm and / or a shape factor that provides for a thickness of 1 mm per m² of surface. They are preferably made of amorphous metal or carbon fibre.

Similar commercial products currently on the market, by way of example are: Grid® marketed by AHT Heating® based on the production material Metglas® also called amorphous metal. Carbon cord, marketed by Thermal Technology®; EP Warmfloor® also called nanopolymeric membrane. Or in the case of high-temperature radiant elements are by way of example Oltre panels marketed in Italy by Santoni srl, each type of radiant panel identified by the designation "infrared heating panel" marketed and manufactured by numerous companies worldwide.

The term zone **7** means a portion of the heating plant **10** managed in a thermally autonomous and independent manner of the other zones. It is a portion of space heated by a radiant device **5** consisting of a radiant element 6 or by a set of several interconnected radiant elements **6**, positioned in a residential portion of premises or the like.

The term group indicated by reference numeral **8** is the set of radiant devices **5** belonging to the corresponding zones 7, which are powered simultaneously. The total electric power of the radiant devices 5 belonging to a group **8** will be almost the same for each group **8**. The preferred number of groups is 2.

The detectors indicated by reference numeral **9** may be elements suitable for the detection of human presence: they are preferably PIA type and microwave transducers; they may also be elements suitable to detect the actual operating conditions of the radiant elements **6**: they are preferably voltage and current transducers.

### Functional description

The radiant elements 6 are crossed by alternating electric current at a predetermined frequency 50 Hz, possibly 60 Hz, in specific markets. It follows that the characteristic period is equal to 0.02 s in the first case and 0.0167 s in the second case. They are characterised by the Joule effect, i.e. they heat up when crossed by an electric current.

As regards the solutions at low temperature with large installation surfaces, i.e. maximum 31°C measured on the surface of the radiant element 6, the radiating elements 5 are made of amorphous metal and have powers ranging from 25 W/m² to 150 W/m ² and are installed under the floor covering, plaster or counter ceiling and above special heat-insulating elements, specially dimensioned to allow the radiation in the right direction, for example panels in polymer foams or the like, such as polystyrene foam, cellular PVC, rock wool or otherwise.

Or the radiant elements 6 are made of heating cable and/or carbon fibre and have powers ranging from 50 W/m2 to 200 W/m2 and are installed under the floor covering or counter ceiling and above special heat-insulating elements, specially dimensioned in order to allow the radiation in the right direction, for example panels in polymer foams or the like, such as polystyrene foam, cellular PVC, rock wool or otherwise. They may also be placed over a cement screed or incorporated in it.

With regard to high-temperature solutions which do not provide for direct contact, i.e. with temperatures higher than 60°C, the radiant elements are electric heat-strips with a power varying between 2 kW/m² to 5 kW/m² and are suspended from the ceiling starting at 2.5 m from the ground up to 4.5 m and characterised by temperatures varying between 150°C and 300°C.

Or the radiant elements 6 are panels hung or suspended from the ceiling and characterised by temperatures varying between 60°C and 120°C with variable power between 1 kW/m² to 1.4 kW/m².

The smart management system 2 supplies power to one group 8 at a time, keeping the other groups **8** off. At the end of a period, the powered group **8** is turned off, and a non-powered group turned on in a specific predetermined order. An alternation of periods of being on and off is thus created. The term period of being on or off means a consecutive interval of time during which the group 8 in question is on or off.

Preferably a variable time of being on is used as required by the needs and characteristics of the heated rooms and the type of the heating elements **5** installed.

Within said period of a group **8** being on it will be possible to keep turned on, or turned off, all the radiant devices **5** of the group. The off time will be determined in such a way that the ambient temperature does not undergo perceptible changes on account of the interruption of the power supply. A variation of temperature of 0.3°C, preferably 0.1°C is deemed satisfactory.

Each radiant device **5** stays on for a period such as to maintain constant over time the temperature of the zone **7** in which it is located and for a nominal power required by the said device.

The voluntary variation of the ambient temperature takes place as follows: the duration of the on period is decreased to lower the temperature and increased to raise it.

The minimum period of powering the radiant devices **5** must be at least five times greater than the characteristic period of the frequency of the electrical network, i.e. greater than 0.1 s for 50 Hz networks and greater than 0.084 s at for 60 Hz networks. The maximum period of powering the radiant devices is preferably equal to 10 s or equal to a period which causes a change in temperature, equal to 0.3 s, preferably 0.1 s.

The sensors **4** communicate the temperature detected in the individual zones **7** to the control device **2** which by means of the actuators **3** varies the on and off time of the radiant devices **5** in order to adjust the temperature to the required values. The detectors **9** communicate to the control device **2** the operating parameters of the radiant devices **5** transmitting the current, voltage, power and energy values detected and thereby allowing the control device **2** to signal any malfunctions.

The unique feature of the smart management method according to the invention is the regulation of the temperature at practically constant values, with negligible variations of the same over time and latency of intervention close to zero, implemented through the variation of the on time of the radiant devices 5.

The smart management method according to the invention achieves important advantages for the occupants of the heated environment, generating a feeling of well-being, relative to the substantially constant temperature.

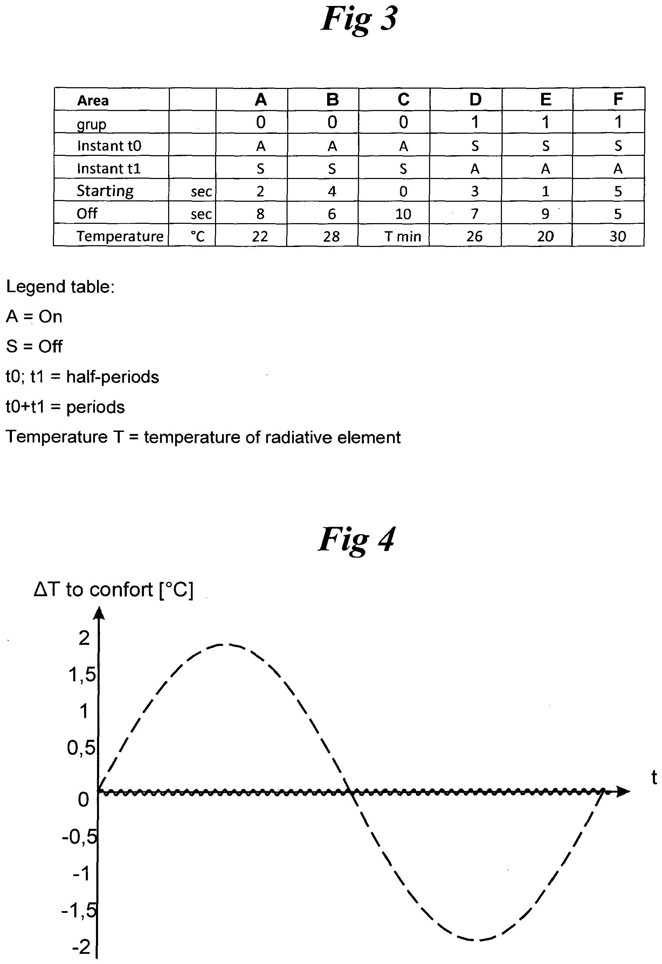

In fact the heat perceived varies as indicated in the solid line in Fig. 4 showing the deviation of the room temperature detected compared to the desired temperature. Conversely, the conventional management methods of heating plants, behave as shown in the dotted line present in the same graph. In addition, the turning on and off of the groups 8 permits the use of a maximum power half that of the real need of the set of radiant devices 5 used, since at most only 50% of said radiating devices 5 will be active at the same time. Furthermore, on account of the advantageous reduction of consumption, the maximum electric power that the electricity grid operator must provide will be 50% lower than the rated power of the entire heating system 10. This results in a reduction of the costs of management and use of electricity.

In addition, the smart management system reduces the adjustment losses resulting in improved energy efficiency of the heating system **10**.

Living comfort is improved, reducing the power used and reducing the energy consumed.

Variations may be made to the invention described herein without departing from the scope of the inventive concept defined in the claims. In said sphere all the details may be replaced with equivalent elements and the materials, shapes and dimensions may be as desired.

### Example

We can exemplify the behaviour of the smart management method 1 with **Fig. 3****.** In the instant t0 the radiant devices 5 belonging to the group g0 come on, i.e. those positioned in the zones 7A, 7B, 7C and the radiant devices 5 located in zones 7D, 7E, 7F remain off ; in the instant t1 the process reverses and what was off comes on and what was on goes off.

The on time may be different for each radiant device **5** belonging to a said group **8**, however, lower than the powering time of the group and the temperatures reached by said radiant devices 5 depend on the on and off time. In the example given a total on and off time of 10 s was set; the maximum permissible on period will be 5 s, the off-time may vary from 5 s to 10 s; where 5 s corresponds to the maximum temperature which can be reached by the radiant device 5 and 10 s correspond to the minimum temperature which can be reached by the radiant device 5, i.e. the unheated room temperature.

The table in **Fig. 3** gives the values measured during experimental tests performed on a heating plant with electrical radiant elements **6** consisting of Grid-type amorphous metal, arranged on the floor under a wooden covering of 8mm and with 3 cm of XPS insulation placed between the radiant element **6** and screed.

## Claims

1. Method of heating an environment composed of a plurality of zones (7), said method being implemented by means of a heating system (10) comprising:
- a radiant device (5), comprising at least one radiant element (6), for each single said zone (10), suitable to provide heat by irradiation,
- said radiant devices (5) being connected to a power supply suitable to supply alternating electric current at a given frequency,
- a control device (2) connected to said radiant devices (5), comprising:
- and actuators (3) suitable to turn on and off said radiant elements (6),
said method being consisting of:
- dividing into at least two groups (8) said radiant devices (5), and thus said zones (7),
- dividing an on time into two periods, in each of said two periods activating only one said group (8) of said radiant devices (5), and disabling the entire remaining said group (8),
- each of said radiant devices (5) being on for an on period comprised in said two period,
- said two period being at least 5 times greater than the period determined by the frequency of said alternating electric current,
- by means of said control device (2) and said actuators (3) modifying the on time of said radiant devices (5) as a function of the measurements of sensors (4), and consequently regulating the temperature of said radiant device (5) by changing the on time;
said method being **characterised in that**:
- said control device (2) comprises sensors (4) of the temperature of said radiant devices and **in that** said method consists of detecting the temperature of said radiant devices (5) by means of said sensors (4) and communicating it to said control device (2),
- said radiant devices (5) extending mainly along a surface, have a thickness of less than 5 mm and a shape factor that provides for a thickness of 1 mm per m² of surface,
- said period is less than the time causing a lowering of the temperature of one of said radiant elements of more than 0.3°C.

2. Method according to the preceding claims, wherein said radiant elements (5) are in amorphous metal or carbon fibre.

## Patentansprüche

1. Intelligentes Verwaltungsverfahren für Heizwerk (10) mit elektrischen Strahlungselementen zum Beheizen einer aus einer Vielzahl von Bereichen (7) bestehenden Umgebung, das Folgendes umfasst:
- eine Strahlungsvorrichtung (5), umfassend mindestens ein Strahlungselement (6) für jeden einzelnen genannten Bereich (10), das geeignet ist, Wärme durch Strahlung zu liefern,
- wobei die genannten Strahlungsvorrichtungen (5) an ein Stromnetz angeschlossen sind, das geeignet ist, Wechselstrom bei einer bestimmten Frequenz zu liefern,
- ein an die genannten Strahlungsvorrichtungen (5) angeschlossenes Steuergerät (2),
- und Stellantriebe (3), die geeignet sind, die genannten Strahlungselemente (6) ein- und auszuschalten,
wobei das genannte Verfahren in Folgendem besteht:
- dem Unterteilen der genannten Strahlungsvorrichtungen (5) und damit der genannten Bereiche (7) in mindestens zwei Gruppen (8),
- dem Unterteilen einer Einschaltzeit in zwei Zeiträume, wobei in jedem der genannten beiden Zeiträume jeweils nur eine genannte Gruppe (8) der genannten Strahlungsvorrichtungen (5) aktiviert und die gesamte genannte verbleibende Gruppe (8) deaktiviert wird,
- wobei jede der genannten Strahlungsvorrichtungen (5) für einen in dem genannten Zeitraum enthaltenen Zeitraum eingeschaltet ist,
- wobei die genannten beiden Zeiträume mindestens fünf Mal dem von der Frequenz des genannten Wechselstroms vorgegebenen Zeitraum entsprechen,
- Änderung der Einschaltzeit der genannten Strahlungsvorrichtungen (5) über das genannte Steuergerät (2) und die genannten Stellantriebe (3) abhängig von den Messungen von Sensoren (4), folglich Einstellen der Temperatur der genannten Strahlungsvorrichtung (5) durch Ändern der Einschaltzeit,
wobei dieses Verfahren **dadurch gekennzeichnet ist, dass**:
- das genannte Steuergerät (2) die genannten Sensoren (4) zum Messen der Temperatur der genannten Strahlungselemente umfasst und dadurch, dass das genannte Verfahren darin besteht, die Temperatur der genannten Strahlungsvorrichtungen (5) mit Hilfe der genannten Sensoren (4) zu messen und diese an das genannte Steuergerät (2) zu übertragen,
- wobei die genannten Strahlungsvorrichtungen (5) vorrangig entlang einer Oberfläche verlaufen, eine Stärke von weniger als 5 mm und einen Formfaktor aufweisen, der eine Stärke von 1 mm für jeden m² Oberfläche vorsieht,
- wobei die genannte Wechselzeit unter der Zeit liegt, die zu einem Sinken der Temperatur eines der Strahlungselemente von mehr als 0,3°C führt.

2. Verfahren nach einem oder mehreren der vorangegangenen Elemente, bei dem die genannten Strahlungselemente (5) aus amorphem Metall oder Carbonfaser bestehen.

## Revendications

1. Procédé de chauffage d'une pièce composé d'une pluralité de zones (7), ledit procédé étant mis en oeuvre à l'aide d'une centrale de chauffage (10) comprenant :
- un dispositif radiatif (5), comprenant au moins un élément radiatif (6), pour chaque zone (10) individuelle apte à fournir de la chaleur par rayonnement,
- lesdits dispositifs radiatifs (5) étant reliés à un réseau électrique apte à fournir du courant électrique alterné à une fréquence déterminée,
- un dispositif de commande (2) relié auxdits dispositifs radiatifs (5),
- et des actionneurs (3) aptes à allumer et éteindre lesdits éléments radiatifs (6),
ledit procédé consistant en :
- diviser en au moins deux groupes (8) lesdits dispositifs radiatifs (5) et donc lesdites zones (7),
- diviser un temps d'allumage en deux périodes, dans chacune desdites deux périodes activer un seul desdits groupes (8) desdits dispositifs radiatifs (5), et désactiver tous lesdits groupes (8) restant,
- chacun desdits dispositifs radiatifs (5) étant allumé pour une période d'allumage compris dans ladite période,
- lesdites deux périodes étant au moins 5 fois supérieures à la période déterminée par la fréquence dudit courant électrique alterné,
- à l'aide dudit dispositif de commande (2) et desdits actionneurs (3) modifier le temps d'allumage desdits dispositifs radiatifs (5) en fonction des mesures de capteurs (4), régler en conséquence la température dudit dispositif radiatif (5) par le biais de la variation du temps d'allumage.
ledit procédé étant **caractérisé en ce que** :
- ledit dispositif de commande (2) comprend lesdits capteurs (4) de température desdits éléments radiatifs et **en ce que** ledit procédé consiste à mesurer la température desdits dispositifs radiatifs (5) à l'aide desdits capteurs (4) et la transmettre audit dispositif de commande (2),
- lesdits dispositifs radiatifs (5) se développent essentiellement le long d'une surface, ont une épaisseur inférieure à 5 mm et un facteur de forme qui prévoit une épaisseur de 1 mm par chaque m² de surface,
- ladite période d'alternance est inférieure au temps qui déclenche une baisse de la température d'un desdits éléments radiatifs supérieure à 0,3 °C.

2. Procédé selon l'une ou plusieurs des revendications précédentes dans lequel lesdits dispositifs radiatifs (5) sont en métal amorphe ou en fibre de carbone.
